# EUROPÄISCHE PATENTSCHRIFT

(11) **EP 0 894 056 B1**
(45) Veröffentlichungstag und Bekanntmachung des Hinweises auf die Patenterteilung: **15.09.1999**
(21) Anmeldenummer: 97923734.4
(22) Anmeldetag: 09.04.1997
(51) Int. Cl.: B60L 13/00

(54) **STROMVERSORGUNGSSYSTEM FÜR EINEN LANGSTATORANTRIEB**
POWER SUPPLY FOR A LONGITUDINAL STATOR DRIVE
SYSTEME D'ALIMENTATION EN COURANT POUR DISPOSITIF D'ENTRA NEMENT A STATOR LONGITUDINAL

(30) Priorität: 18.04.1996 DE 19615346; 05.03.1997 DE 19708993
(43) Veröffentlichungstag der Anmeldung: 03.02.1999
(73) Patentinhaber: SIEMENS AKTIENGESELLSCHAFT, 80333 München (DE)
(72) Erfinder: FISCHPERER, Rolf, D-10719 Berlin (DE)
(86) Internationale Anmeldenummer: DE9700725
(87) Internationale Veröffentlichungsnummer: WO9739912

(56) Entgegenhaltungen:
- DE-A- 2 544 665
- DE-A- 2 805 994
- FR-A- 2 688 523

## Beschreibung

Die Erfindung betrifft ein Stromversorgungssystem für einen Langstatorantrieb.

Ein derartiges Stromersorgungssystem ist z.B. durch die DE 28 05 994 A1 bekannt. Das bekannte Stromversorgungssystem weist zwei voneinander unabhängige Fahrspuren mit jeweils einer Langstatorwicklung auf. Die Wicklungsabschnitte jeder Fahrspur sind über zwei parallele Stromleitungen und Schalteinrichtungen mit den Unterwerken verbindbar. Die Schalteinrichtungen umfassen kontaktlose Halbleiterschalter und kontaktbehaftete Schaltelemente. Das Schließen des kontaktbehafteten Schaltelementes erfolgt vor dem Zuschalten der Spannung durch den entsprechenden Halbleiterschalter, wohingegen das Öffnen des kontaktbehafteten Schaltelementes nach dem Spannungsfreischalten durch den Halbleiterschalter stattfindet.

Weiterhin ist durch den Aufsatz "Energieversorgung des Langstatorantriebs" in der Zeitschrift "etz" Bd. 108 (1987) Heft 9, Seiten 378 bis 381, ein Stromversorgungssystem für einen Langstatorantrieb bekannt. Dieses Stromversorgungssystem umfaßt eine Fahrspur mit einer linken und einer rechten Motorseite. Mehrere Langstatorabschnitte sind zu mindestens einem Antriebsbereich zusammengefaßt. Jeder Antriebsbereich ist dadurch gekennzeichnet, daß seine sämtlichen Statorabschnitte durch dieselben Umrichter mit Energie versorgt werden. Die Grenzen für die Antriebsbereiche werden im allgemeinen so gewählt, daß diese Grenzen im vorgesehenen Zugfolgeabstand liegen, so daß auf der einzigen Fahrspur mehrere Fahrzeuge im selben zeitlichen Abstand verkehren können.

Ferner ist durch den Aufsatz "Stand der Entwicklung des elektromagnetischen Schnellbahnsystems" in der Zeitschrift "ZEV-Glas. Ann.". 104 (1980) Nr. 8/9 August/September, Seiten 233 bis 240, eine als Weiche ausgebildete Spurwechseleinrichtung für einen Fahrweg mit Langstator bekannt. Am beweglichen Ende der Weiche endet der betreffende Schaltabschnitt.

Darüber hinaus ist durch die FR 2 688 523 A1 eine Spurwechseleinrichtung für zwei unabhängige Fahrspuren eines Langstatorantriebs bekannt. Die Spurwechseleinrichtung ist als Weiche ausgeführt und die beiden unabhängigen Fahrspuren weisen jeweils wenigstens einen Langstatorabschnitt auf.

Schließlich ist durch die DE 25 44 665 A1 eine mechanisch stellbare Weiche für eine magnetische Schwebebahn bekannt. Die Weiche umfaßt eine verschiebbare Zunge, an der eine Statorwicklung eines Linearmotors und darunterliegende sekundäre Leiterschleifen angeordnet sind.

Aufgabe der vorliegenden Erfindung ist es, bei einem Stromversorgungssystem für einen Langstatorantrieb eine einfache Energieeinspeisung in einen über mindestens eine Spurwechseleinrichtung geführten, Langstatorabschnitt zu ermöglichen.

Die Aufgabe wird erfindungsgemäß durch die Merkmale des Anspruchs 1 gelöst. Vorteilhafte Ausgestaltungen der Erfindung sind in den weiteren Ansprüchen beschrieben.

Das erfindungsgemäße Stromversorgungssystem für einen Langstatorantrieb umfaßt wenigstens zwei unabhängige Fahrspuren, die jeweils wenigstens einen Langstatorabschnitt aufweisen, und die durch wenigstens eine Spurwechseleinrichtung miteinander verbindbar sind. Die Langstatorabschnitte sind in mehrere Antriebsbereiche aufgeteilt, durch die jeweils unabhängig voneinander ein Fahrzeug antreibbar ist. Wenigstens eine Spurwechseleinrichtung weist wenigstens einen elektrischen Kontakt auf, der durch die Spurwechseleinrichtung derart zwangsgeführt ist, daß eine elektrische Verbindung zwischen verschiedenen Langstatorabschnitten herstellbar oder lösbar ist.

Bei einem Stromversorgungssystem nach Anspruch 1 ist mindestens ein Langstatorabschnitt zum einen oder zum anderen Antriebsbereich geschaltet. Dadurch sind die Grenzen der Antriebsbereiche beliebig einstellbar. Die Fahrspur oder Teile davon können damit in Abhängigkeit von der Stellung der Spurwechseleinrichtung bzw. der Spurwechseleinrichtungen verschiedenen Antriebsbereichen zugeordnet werden. Die Belegungszeit der Antriebsbereiche kann damit auf einfache Weise angepaßt werden.

Weiterhin ist aufgrund der Zwangsführung des jeweiligen elektrischen Kontaktes durch die Spurwechseleinrichtung keine Fernsteuerung von Schalteinrichtungen erforderlich. Eine gesonderte Überwachungseinrichtung für die elektrischen Kontakte ist damit nicht notwendig, da die Lage der Spurwechseleinrichtung ohnehin sicher überwacht wird.

Konventionelle fernsteuerbare Schalter kommen nicht in Betracht, da diese nicht unter allen Betriebsbedingungen bzw. Störfällen ein sicheres Abtrennen gewährleisten können, da z.B. einerseits Leistungsschalter keine Gleichströme abschalten können (Lichtbogenbildung) und andererseits Gleichstromschalter Ströme unterhalb eines bestimmten Grenzwertes nicht schalten können (keine ausreichende Löschenergie) und nicht ausreichend spannungsfest sind.

Ein sicheres Abtrennen des betroffenen Langstatorabschnittes ist z.B. dann notwendig, wenn das Fahrzeug bei einem auftretenden Fehlerfall auf ein offenes Weichenende zufährt. Die Schalter müßten deshalb ständig durch sehr aufwendige Überwachungseinrichtungen der höchsten Sicherheitskategorie auf ihre korrekte Funktion überwacht werden. Im Störungsfall, d.h. bei Ausfall der Überwachungseinrichtung oder bei Versagen der Schalteinrichtungen, müssen alle Antriebsbereiche, die auf den betroffenen Fahrwegsbereich einspeisen könnten, vom Einspeisenetz getrennt werden. Dies hat im allgemeinen eine schwerwiegende Betriebsstörung zur Folge.

Für ein Stromversorgungssystem nach Anspruch 2 ist der Verkabelungsaufwand besonders gering, wohingegen bei einem Stromversorgungssystem nach Anspruch 3 große Antriebsbereiche umkonfiguriert werden können.

Ein Ausführungsbeispiel der Erfindung wird in der nachfolgenden Beschreibung anhand der Zeichnung näher erläutert. Es zeigen:
- FIG 1: eine Strecke mit zwei parallel verlaufenden Fahrspuren im Normalbetrieb,
- FIG 2: die Strecke gemäß FIG 1 mit einer Störung in einem Antriebsbereich,
- FIG 3: die Strecke gemaß FIG 2 mit einer Störung in einem anderen Antriebsbereich,
- FIG 4: einen für das erfindungsgemäße Stromversorgungssystem besonders geeigneten elektrischen Kontakt in geöffneter Stellung,
- FIG 5: den elektrischen Kontakt gemäß FIG 4 in einer seiner geschlossenen Stellungen.

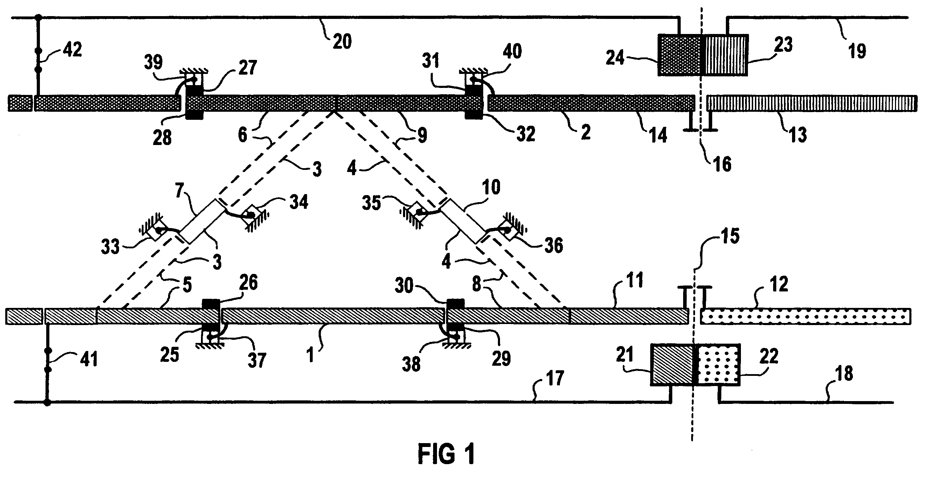

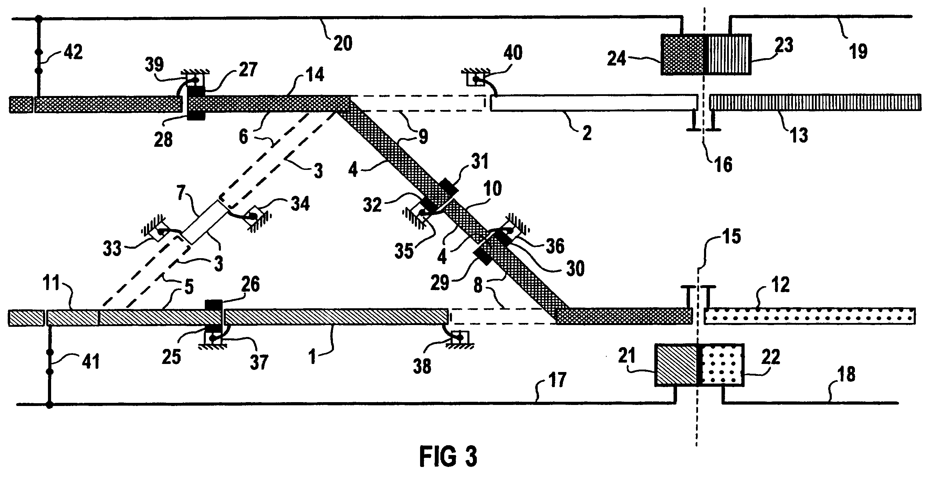

In den FIG 1 bis 3 ist mit 1 eine erste Fahrspur und mit 2 eine zweite Fahrspur bezeichnet. Beide Fahrspuren 1 und 2 sind durch zwei Überleitungsstellen 3 und 4 miteinander verbindbar.

Die Überleitungsstelle 3 umfaßt im dargestellten Ausführungsbeispiel zwei Weichen 5 und 6 sowie ein starres Fahrspurteil 7. Die Überleitungsstelle 4 umfaßt in analoger Weise zwei Weichen 8 und 9 sowie ein starres Fahrspurteil 10.

In den FIG 1 bis 3 sind vier Antriebsbereiche dargestellt. Im Normalbetrieb (FIG 1) sind die Antriebsbereiche 11 und 12 der Fahrspur 1 und die Antriebsbereiche 13 und 14 der Fahrspur 2 zugeordnet.

In den FIG 1 bis 3 ist der Antriebsbereich 11 schräg schraffiert, der Antriebsbereich 12 gepunktet, der Antriebsbereich 13 senkrecht schraffiert und der Antriebsbereich 14 gekreuzt schraffiert.

Die Antriebsbereiche 11 und 12 weisen eine gemeinsame Antriebsbereichsgrenze 15 und die Antriebsbereiche 13 und 14 eine gemeinsame Antriebsbereichsgrenze 16 auf. Durch die Antriebsbereichsgrenzen 15 und 16 wird die Zugfolge bestimmt.

Um ein schnelles Wechseln von Fahrspur 1 auf Fahrspur 2 zu ermöglichen, sollten die Überleitungsstellen 3 und 4 möglichst nahe an den Antriebsbereichsgrenzen 15 und 16 angeordnet sein. Ein direktes Anordnen auf den Antriebsbereichsgrenzen 15 und 16 ist im allgemeinen aus trassierungstechnischen Gründen nicht möglich. Die Antriebsbereiche 11 bis 14 werden auf bekannte Weise über Streckenkabel 17 bis 20 von Antriebsblöcken 21 bis 24 gespeist.

Jeder Weiche 5 und 6 sowie 8 und 9 sind jeweils zwei Kontakte 25 bis 32 zugeordnet. Die Kontakte 25 und 26 sind hierbei durch die Weiche 5, die Kontakte 27 und 28 durch die Weiche 6, die Kontakte 29 und 30 durch die Weiche 8, und die Kontakte 31 und 32 durch die Weiche 9 zwangsgeführt.

Die Stellung der Weiche bestimmt damit welche Fahrspur kontaktiert wird. Das starre Fahrspurteil 7 der Überleitungsstelle 3 weist zwei Gegenkontakte 33 und 34 auf. Das starre Fahrspurteil 10 der Überleitungsstelle 4 weist zwei Gegenkontakte 35 und 36 auf.

Weiterhin weist die Fahrspur 1 im Bereich der Weichen 5 und 8 Gegenkontakte 37 und 38 auf. Die Fahrspur 2 weist im Bereich der Weichen 6 und 9 Gegenkontakte 39 und 40 auf.

Im Normalbetrieb (FIG 1) sind die Fahrspuren 1 und 2 voneinander getrennt, wobei der Antriebsbereich 11 über einen geschlossenen Einspeiseschalter 41 an das Streckenkabel 17 und der Antriebsbereich 14 über einen geschlossenen Einspeiseschalter 42 an das Streckenkabel 20 geschaltet ist. Im Normalbetrieb liegt der Kontakt 25 der Weiche 5 am Gegenkontakt 37 der Fahrspur 1 und der Kontakt 29 der Weiche 8 am Gegenkontakt 38 der Fahrspur 1 an. In gleicher Weise liegt der Kontakt 27 der Weiche 6 am Gegenkontakt 39 der Fahrspur 2 und der Kontakt 31 der Weiche 9 am Gegenkontakt 40 der Fahrspur 2 an.

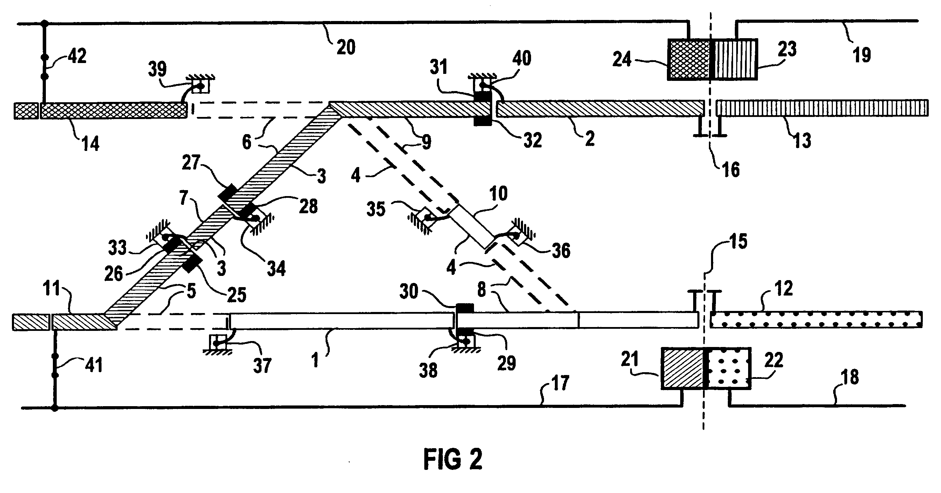

Tritt im Antriebsbereich 12 eine Störung auf (FIG 2), dann erfolgt durch Schalten der Weichen 5 und 6 der Überleitungsstelle 3 eine Verbindung zwischen Fahrspur 1 und Fahrspur 2. Dadurch erstreckt sich der Antriebsbereich 11 bis unmittelbar an den Antriebsbereich 13, obwohl diese Antriebsbereiche im Normalbetrieb (FIG 1) nicht aneinander grenzen. Dies bedeutet, daß einerseits die Belegungszeit des Antriebsbereiches 11 nicht wesentlich verändert wird und andererseits der Antriebsbereich 14 nicht unnötig durch das übergeleitete Fahrzeug des Antriebsbereiches 11 blockiert (überbelegt) wird, sondern stattdessen nach wie vor das ihm zugeordnete Fahrzeug führen kann. Desweiteren genügt es im Falle einer Störung stets, den dem betroffenen Fahrzeug zugeordneten Antriebsbereich (z.B. Antriebsbereich 11) abzuschalten, da andere Antriebsbereiche (z.B. Antriebsbereich 14) keine Möglichkeit haben auf das betroffene Fahrzeug einzuwirken, so daß unnötige Abschaltungen mehrerer Antriebsbereiche vermieden werden.

Analog werden bei einem defekten Antriebsbereich 11 durch Schalten der Weichen 8 und 9 ebenfalls die noch intakten Anteile der Antriebsbereiche von Fahrspur 1 und Fahrspur 2 miteinander verbunden.

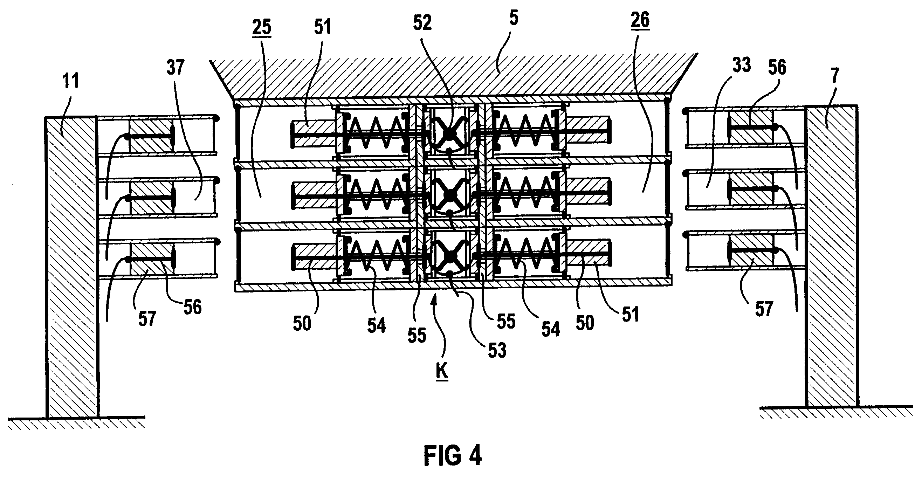

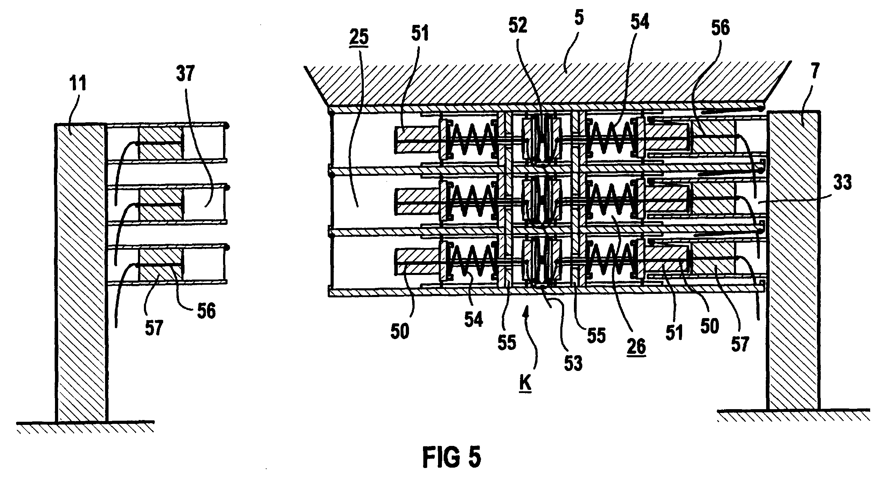

In FIG 4 und 5 ist eine Ausführungsform für die konstruktive Ausgestaltung der Kontakte und Gegenkontakte am Beispiel der Weiche 5 gezeigt, wobei die Einspeisung über die Weiche 5 in den Fahrweg erfolgt.

Die Kontakte 25 und 26 sind an der Unterseite der Weiche 5 angeordnet, wohingegen der Gegenkontakt 33 am starren Fahrspurteil 7 der Überleitungsstelle 3 angeordnet ist und der Gegenkontakt 37 mit dem Antriebsbereich 11 verbunden ist. Die Kontakte 25 und 26 sowie die Gegenkontakte 33 und 37 sind dreisphasig ausgebildet, wobei jede Phase der Kontakte 25 und 26 sowie jede Phase der Gegenkontakte 33 und 37 identisch ausgeführt ist und die drei Phasen parallel untereinander angeordnet sind. Die Kontakte 25 und 26 bilden einen Dreistellungskontakt K, der eine göffnete Stellung und zwei geschlossene Stellungen ermöglicht. Die Kontakte 25 und 26 weisen für jede Phase ein Kontaktelement 50 auf, das jeweils in einer elektrisch isolierten Führung 51 geführt ist.

Die drei Phasen des Kontaktes 25 sind jeweils mit den entsprechenden Phasen des Kontaktes 26 über je ein Verbindungselement 52 mechanisch miteinander verbunden. Weiterhin sind die entsprechenden Phasen des Kontaktes 25 und die entsprechenden Phasen des Kontaktes 26 über je ein elektrisches Kabel 53 elektrisch leitend miteinander und mit der entsprechenden Phase des Stators in der Weiche 5 verbunden.

Weiterhin sind die drei Kontaktelemente 50 jeder Phase der Kontakte 25 und 26 durch jeweils eine Feder 54 in ihre Ruhelage rückführbar. Die Federn 54 sind also bei Offen-Stellung der Kontakte 25 und 26 entspannt (FIG 4) und bei den beiden Schließ-Stellungen der Kontakte 25 und 26 gespannt (FIG 5).

Bei geöffneter Stellung des Dreistellungskontaktes K sind die drei Kontaktelemente 50 des Kontaktes 25 und die drei Kontaktelemente 50 des Kontaktes 26 mit jeweils einer Kurzschlußschiene 55 in Kontakt. Durch die Verbindungselemente 52 und die Federn 54 wird sichergestellt, daß sich die Kontaktelemente 50 der Kontakte 25 und 26 synchron bewegen.

Die dreiphasigen Gegenkontakte 33 und 37 weisen ebenfalls jeweils ein Kontaktelement 56 auf, das ebenfalls in einer elektrisch isolierten Führung 57 geführt ist.

Beim Öffnen des Dreistellungskontaktes K ist durch dessen konstruktiven Aufbau sichergestellt, daß durch den Kontakt der Kontaktelemente 50 mit der Kurzschlußschiene 55 erst ein dreiphasiger Kurzschluß auftritt und sich dann die drei Kontaktelemente 50 des Kontaktes 26 von den drei Kontaktelementen 56 des Gegenkontaktes 33 lösen. Dadurch wird eine Lichtbogenbildung zwischen dem Kontakt 26 und dem Gegenkontakt 33 zuverlässig verhindert.

## Patentansprüche

1. Stromversorgungsystem für einen Langstatorantrieb, das folgende Merkmale umfaßt:
- wenigstens zwei unabhängige Fahrspuren (1,2), die jeweils wenigstens einen Langstatorabschnitt aufweisen und die durch wenigstens eine Spurwechseleinrichtung (5-10) miteinander verbindbar sind, wobei
- die Langstatorabschnitte in mehrere Antriebsbereiche (11-14) aufgeteilt sind, durch die jeweils unabhängig voneinander ein Fahrzeug antreibbar ist, und
- wenigstens eine Spurwechseleinrichtung (5-10) wenigstens einen elektrischen Kontakt (25-40) aufweist, der durch die Spurwechseleinrichtung (5-10) derart zwangsgeführt ist, daß eine elektrische Verbindung zwischen verschiedenen Langstatorabschnitten herstellbar oder lösbar ist.

2. Stromversorgungssystem nach Anspruch 1, wobei Kabel der Statorwicklung direkt an den elektrischen Kontakt geführt sind.

3. Stromversorgungssystem nach Anspruch 1, wobei Strekkenkahel (17-20) der Antriebsbereiche (11-14) an den elektrischen Kontakt geführt sind.

## Claims

1. Power supply system for a long stator drive, which comprises the following features:
- at least two independent tracks (1, 2), which each have at least one long stator section and which can be connected to one another by means of at least one track changing device (5-10),
- the long stator sections being split into a plurality of drive regions (11-14), by means of each of which a vehicle can be driven, independently of one another, and
- at least one track changing device (5-10) has at least one electrical contact (25-40) which is positively guided by the track changing device (5-10) in such a manner that an electrical connection can be produced or disconnected between various long stator sections.

2. Power supply system according to Claim 1, stator winding cables being routed directly to the electrical contact.

3. Power supply system according to Claim 1, section cables (17-20) of the drive regions (11-14) being routed to the electrical contact.

## Revendications

1. Système d'alimentation en courant pour un dispositif d'entraînement à stator longitudinal, comprenant les caractéristiques suivantes :
- au moins deux voies de circulation (1, 2) indépendantes, comportant chacune au moins une portion de stator longitudinal et qui peuvent être reliées entre elles par au moins un dispositif de changement de voie (5 à 10),
- les portions du stator longitudinal étant subdivisés en plusieurs domaines d'entraînement (11 à 14) pouvant chacun indépendamment des autres entraîner un véhicule, et
- au moins un dispositif de changement de voie (5 à 10), comportant au moins un contact électrique (25 à 40), lequel est guidé de force dans le dispositif de changement de voie (5 à 10) de telle sorte qu'il est possible d'établir ou de supprimer une connexion électrique entre différentes portions de stator longitudinal.

2. Système d'alimentation en courant selon la revendication 1, dans lequel câbles de l'enroulement statorique sont amenés directement au contact électrique.

3. Système d'alimentation en courant selon la revendication 1, dans lequel les câbles de tronçon (17 à 20) des domaines d'entraînement (11 à 14) sont amenés au contact électrique.
